# EUROPÄISCHE PATENTSCHRIFT

(11) **EP 2 379 359 B1**
(45) Veröffentlichungstag und Bekanntmachung des Hinweises auf die Patenterteilung: **31.10.2012**
(21) Anmeldenummer: 09774669.7
(22) Anmeldetag: 10.12.2009
(51) Int. Cl.: F01K 23/14, B60K 6/12, B60K 6/00, F01K 25/02, B60K 6/48

(54) **HYBRIDANTRIEBSSYSTEM**
HYBRID DRIVE SYSTEM
SYSTÈME D'ENTRAÎNEMENT HYBRIDE

(30) Priorität: 17.12.2008 DE 102008054819
(43) Veröffentlichungstag der Anmeldung: 26.10.2011
(73) Patentinhaber: Robert Bosch GmbH, 70442 Stuttgart (DE)
(72) Erfinder: WEISSER, Christoph, 70839 Gerlingen (DE); HERNIER, Markus, 70839 Gerlingen (DE); NOACK, Bjoern, Bangalore 560034 (IN); GREIS, Andreas, 70193 Stuttgart (DE)
(86) Internationale Anmeldenummer: PCT/EP2009/066842
(87) Internationale Veröffentlichungsnummer: WO 2010/069857

(56) Entgegenhaltungen:
- WO-A1-2006/055978
- US-A1- 2005 126 837
- US-A1- 2006 102 394

## Beschreibung

Die Erfindung betrifft ein Hybridantriebssystem mit einer Brennkraftmaschine, die mit Kraftstoff aus einem Kraftstofftank betrieben wird, und mit einer hydraulischen Maschine, die mit einem hydraulischen Energiespeicher zusammenwirkt. Die Erfindung betrifft des Weiteren ein Verfahren zum Betreiben eines vorab beschriebenen Hybridantriebsystems.

### Offenbarung der Erfindung

US 2005/126837 A1 offenbart ein Hybridantriebssystem mit einer Brennkraftmaschine, die mit Kraftstoff aus einem Kraftstofftank betrieben wird, und mit einer hydraulischen Maschine, wobei die hydraulische Maschine mit dem gleichen Kraftstoff betrieben wird, mit dem auch die Brennkraftmaschine betrieben wird.

Das gattungsbildende Dokument US 2006/0102 394 offenbart ein Hydbridantriebssystem mit dem Merkmalen des Oberbegriffs des Anspruchs 1.

Aufgabe der Erfindung ist es, ein Hybridantriebssystem mit einer Brennkraftmaschine, die mit Kraftstoff aus einem Kraftstofftank betrieben wird, und mit einer hydraulischen Maschine, die mit einem hydraulischen Energiespeicher zusammenwirkt, zu schaffen, das weniger Bauteile als herkömmliche Hybridantriebssysteme benötigt.

Die Aufgabe ist bei einem Hybridantriebssystem mit einer Brennkraftmaschine, die mit Kraftstoff aus einem Kraftstofftank betrieben wird, und mit einer hydraulischen Maschine, die mit einem hydraulischen Energiespeicher zusammenwirkt, dadurch gelöst, dass die hydraulische Maschine mit dem gleichen Kraftstoff betrieben wird, mit dem auch die Brennkraftmaschine betrieben wird. Die hydraulische Maschine wird wahlweise anstelle der Brennkraftmaschine als Antriebsmotor oder als Druckpumpe für den hydraulischen Energiespeicher betrieben. Gemäß einem wesentlichen Aspekt der Erfindung wird die hydraulische Maschine nicht mit einem herkömmlichen Hydraulikfluid, sondern mit Kraftstoff, vorzugsweise mit Dieselkraftstoff, betrieben. Durch den Kraftstoffverbrauch im Betrieb der Brennkraftmaschine kann auf einfache Art und Weise eine ausreichende Erneuerung des als Hydraulikfluid dienenden Kraftstoffs sichergestellt werden. Ein separater Ausgleichsbehälter für Hydraulikfluid kann entfallen.

Ein bevorzugtes Ausführungsbeispiel des Hybridantriebssystems ist dadurch gekennzeichnet, dass die hydraulische Maschine hydraulisch mit dem Kraftstofftank der Brennkraftmaschine und mit dem hydraulischen Energiespeicher verbunden ist. Der Kraftstofftank wird gemäß einem weiteren Aspekt der Erfindung als Ausgleichsbehälter für die Antriebshydraulik verwendet. Die hydraulische Maschine kann selbst ansaugend konstruiert und ausgelegt sein. Dann erfolgt die Versorgung der hydraulischen Maschine im Pumpenbetrieb direkt aus dem Kraftstofftank.

Ein weiteres bevorzugtes Ausführungsbeispiel des Hybridantriebssystems ist dadurch gekennzeichnet, dass eine Vorförderpumpe zwischen den Kraftstofftank und die hydraulische Maschine geschaltet ist. Gemäß einem weiteren Aspekt der Erfindung wird eine bereits vorhandene Vorförderpumpe eines Kraftstoffeinspritzsystems verwendet, um die hydraulische Maschine mit Kraftstoff zu versorgen.

Ein weiteres bevorzugtes Ausführungsbeispiel des Hybridantriebssystems ist dadurch gekennzeichnet, dass zwischen die hydraulische Maschine und den hydraulischen Energiespeicher eine Steuereinheit geschaltet ist. Bei der Steuereinheit handelt es sich vorzugsweise um eine Steuerventileinrichtung, durch welche die hydraulische Maschine so mit dem hydraulischen Energiespeicher und/oder dem Kraftstofftank verschaltet werden kann, dass die hydraulische Maschine entweder als Hydraulikpumpe oder als Hydraulikmotor betrieben wird. Die Steuerventileinrichtung kann auch nur dazu verwendet werden, um Leistungen zu schalten. Der Pumpen/Motor-Betrieb kann dann autark an der Arbeitsmaschine eingestellt werden.

Ein weiteres bevorzugtes Ausführungsbeispiel des Hybridantriebssystems ist dadurch gekennzeichnet, dass die Steuereinheit hydraulisch mit einer Kupplung verbunden ist, die zwischen die Brennkraftmaschine und die hydraulische Maschine geschaltet ist. Die Kupplung zwischen der Brennkraftmaschine und der hydraulischen Maschine erfordert in den Übergängen zwischen den einzelnen Betriebesmodi ein schnelles Schließen und kontrolliertes Öffnen. Durch die Integration der Kupplungsbetätigung in die Antriebshydraulik können die Eigenschaften von herkömmlichen elektrischen Stelleinrichtungen übertroffen werden.

Ein weiteres bevorzugtes Ausführungsbeispiel des Hybridantriebssystems ist dadurch gekennzeichnet, dass die Steuereinheit hydraulisch mit einem Hydraulikmotor verbunden ist, der antriebsmäßig mit einer Kraftstoffhochdruckpumpe eines Kraftstoffeinspritzsystems verbunden ist. Damit verschlechtert sich zwar der Gesamtwirkungsgrad zur Erzeugung des Einspritzdrucks in dem Kraftstoffeinspritzsystem, jedoch können überraschenderweise auch Vorteile erzielt werden. So können zum Beispiel die Anforderungen an die Kraftstoffhochdruckpumpe durch einen Verzicht auf eine Saugdrossel reduziert werden. Darüber hinaus ist der Einbauort der Kraftstoffhochdruckpumpe frei wählbar, da die Kraftstoffhochdruckpumpe nicht mehr an die Brennkraftmaschine angebaut werden muss. Des Weiteren kann die Kraftstoffhochdruckpumpe getrennt von der Brennkraftmaschine anlaufen.

Ein weiteres bevorzugtes Ausführungsbeispiel des Hybridantriebssystems ist dadurch gekennzeichnet, dass die Steuereinheit hydraulisch mit einem Eingang einer beziehungsweise der Kraftstoffhochdruckpumpe verbunden ist. Dadurch ist es möglich, die Kraftstoffhochdruckpumpe bedarfsabhängig mit Kraftstoff zu versorgen, der durch die hydraulische Maschine mit Druck beaufschlagt ist. Das bringt Vorteile bei einem schnellen Start der Brennkraftmaschine. Durch ein Entspannen des Kraftstoffs aus der Antriebshydraulik kann gegebenenfalls auch eine Vorförderung der Kraftstoffhochdruckpumpe entfallen.

Ein weiteres bevorzugtes Ausführungsbeispiel des Hybridantriebssystems ist dadurch gekennzeichnet, dass der hydraulische Energiespeicher einen mit Kraftstoff gefüllten Gasdruckspeicher umfasst, der mit dem Kraftstofftank verbindbar ist oder in Verbindung steht. Der hydraulische Energiespeicher wird vorzugsweise über die hydraulische Maschine im Pumpenbetrieb mit Druck beaufschlagt.

Bei einem Verfahren zum Betreiben eines vorab beschriebenen Hybridantriebssystems ist die oben angegebene Aufgabe dadurch gelöst, dass die hydraulische Maschine mit dem gleichen Kraftstoff betrieben wird, mit dem auch die Brennkraftmaschine betrieben wird. Im Betrieb der Brennkraftmaschine funktioniert die hydraulische Maschine als Druckpumpe, die durch die Brennkraftmaschine angetrieben wird. Im Motorbetrieb wird die hydraulische Maschine durch den hydraulischen Energiespeicher angetrieben.

Ein bevorzugtes Ausführungsbeispiel des Verfahrens ist dadurch gekennzeichnet, dass die Kraftstoffhochdruckpumpe des Kraftstoffeinspritzsystems bedarfsabhängig mit Kraftstoff versorgt wird, der durch die hydraulische Maschine mit Druck beaufschlagt wird beziehungsweise wurde. Das bringt unter anderem Vorteile bei einem schnellen Start der Brennkraftmaschine.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
- Figur 1: eine stark vereinfachte schematische Darstellung eines erfindungsgemäßen Hybridantriebssystems und
- Figur 2: ein kartesisches Koordinatendiagramm, in dem ein beispielhafter Verlauf der Drehzahl der Brennkraftmaschine und des Raildrucks des in Figur 1 dargestellten Hybridantriebssystems über der Zeit aufgetragen sind.

### Beschreibung der Ausführungsbeispiele

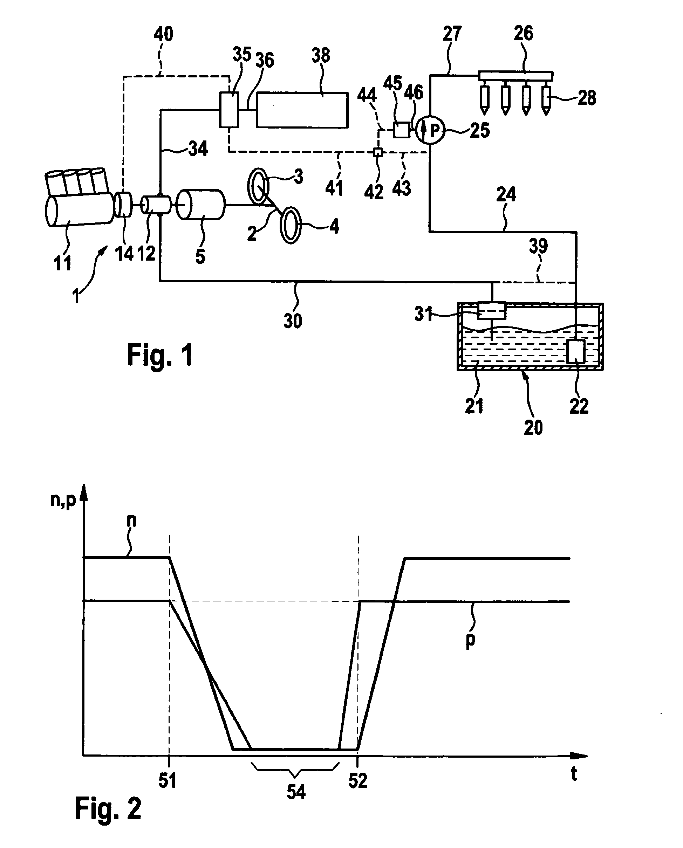

In Figur 1 ist rein beispielhaft ein Antriebsstrang 1 eines Kraftfahrzeugs stark vereinfacht schematisch dargestellt. Der Antriebsstrang 1 umfasst eine Antriebsachse 2 mit zwei Rädern 3, 4, die über die Antriebsachse 2 angetrieben werden. Die Antriebsachse 2 ist unter Zwischenschaltung eines Getriebes 5 mechanisch mit einer Brennkraftmaschine 11 koppelbar, über welche die Antriebsachse 2 angetrieben werden kann. Alternativ kann die Antriebsachse 2 über eine hydraulische Maschine 12 angetrieben, die wahlweise als Hydraulikmotor oder als Hydraulikpumpe betrieben werden kann. Zwischen die Brennkraftmaschine 11 und die hydraulische Maschine 12 ist eine Kupplung 14 geschaltet, durch welche die Brennkraftmaschine 11 von dem Rest des Antriebsstrangs 1 abkoppelbar ist.

Das Hybridantriebssystem 1 umfasst des Weiteren einen Kraftstofftank 20, der mit Kraftstoff 21 gefüllt ist. Bei dem Kraftstoff 21 handelt es sich vorzugsweise um Dieselkraftstoff, der gemäß einem wesentlichen Aspekt der Erfindung nicht nur zur Versorgung der Brennkraftmaschine 11 genutzt wird, sondern darüber hinaus als Arbeitsfluid, insbesondere Hydraulikfluid, für die hydraulische Maschine 12 verwendet wird.

Der Kraftstoff 21 wird mit Hilfe einer zum Beispiel in dem Kraftstofftank 20 angeordneten Vorförderpumpe 22 durch eine Kraftstoffleitung 24 einer Kraftstoffhochdruckpumpe 25 zugeführt. Die Kraftstoffhochdruckpumpe 25 kann aber auch selbstansaugend ausgeführt sein.

Die Kraftstoffhochdruckpumpe 25 ist Teil eines Kraftstoffeinspritzsystems, insbesondere eines Dieseleinspritzsystems. In der Kraftstoffhochdruckpumpe 25 wird der aus dem Kraftstofftank 20 angesaugte beziehungsweise geförderte Kraftstoff mit Hochdruck beaufschlagt und über eine Kraftstoffhochdruckleitung 27 einem zentralen Kraftstoffhochdruckspeicher 26 zugeführt, der auch als Common Rail bezeichnet wird. Aus dem zentralen Kraftstoffhochdruckspeicher 26 wird der mit Hochdruck beaufschlagte Kraftstoff über Kraftstoffeinspritzventile 28, die auch als Injektoren bezeichnet werden, in Brennräume der Brennkraftmaschine 11 eingespritzt.

Der Kraftstoff 21 aus dem Kraftstofftank 20 wird über eine Filtereinrichtung 31 und eine Hydraulikleitung 30 ebenfalls der hydraulischen Maschine 12 zugeführt. Die Filtereinrichtung 31 wird aufgrund von Druckabfällen vorzugsweise nur beim Entspannen des Kraftstoffs im Motorbetrieb durchströmt. Die Hydraulikleitung 30 kann, ebenso wie die vorab beschriebenen Kraftstoffleitungen 24 und 27 sowie die im Folgenden beschriebenen weiteren Hydraulikleitungen, als separate Leitung oder als Kanal ausgeführt sein, der, zumindest teilweise, durch einen Gehäusekörper verläuft. Die hydraulische Maschine 12 steht über eine weitere Hydraulikleitung 34 mit einer Steuereinheit 35 in Verbindung. Bei der Steuereinheit 35 handelt es sich vorzugsweise um eine hydraulische Steuerventileinrichtung, die über eine weitere Hydraulikleitung 36 mit einem hydraulischen Energiespeicher 38 in Verbindung steht.

Bei dem in Figur 1 skizzierten Aufbau entspricht die Drehzahl der hydraulischen Maschine 12, wenn die Kupplung 14 geschlossen ist, der Drehzahl der Brennkraftmaschine 11, so dass bei der Auslegung entsprechende Wirkungsgradbereiche zu berücksichtigen sind. Alternativ kann die Drehzahl der Brennkraftmaschine 11 auch über ein zwischengeschaltetes Getriebe übersetzt beziehungsweise untersetzt werden.

Im Pumpenbetrieb wird die hydraulische Maschine 12 von der Brennkraftmaschine 11 angetrieben, so dass Kraftstoff 21 aus dem Kraftstofftank 20 mit Hilfe der hydraulischen Maschine 12 über die Steuereinheit 35 in den Energiespeicher 38 gefördert wird. Je nach Ausführung der hydraulischen Maschine 12 können mit Hilfe der Steuereinheit 35 verschiedene Schaltungen realisiert werden. Zum einen kann die hydraulische Maschine 12 im Pumpenbetrieb selbstansaugend ausgeführt sein. Dann erfolgt die Fluidversorgung der hydraulischen Maschine 12 direkt aus dem Kräftstofftank 20. Alternativ kann die hydraulische Maschine 12 auch nicht selbstansaugend ausgeführt sein. Dann kann die hydraulische Maschine 12 gemäß einem weiteren Aspekt der Erfindung mit der Vorförderpumpe 22 des Kraftstoffeinspritzsystems verbunden werden, wie durch eine gestrichelte Linie 39 angedeutet ist. Die Vorförderpumpe 22 ist vorzugsweise elektrisch angetrieben. Auch in diesem Fall ist vor dem Eintritt des Kraftstoffs in die hydraulische Maschine 12 eine Filtrierung vorzusehen. Allerdings kann es bei der technischen Umsetzung der durch die gestrichelte Linie 39 angedeuteten Variante Probleme geben, da die auftretenden Volumenströme für elektrische Vorfördersysteme relativ groß sind.

Wenn die hydraulische Maschine 12 nicht selbstansaugend ausgeführt ist, dann wird vorzugsweise das beschriebene Vorförderkonzept verwendet. Zudem kann jedoch in bestimmten Situationen die Kraftstoffhochdruckpumpe 25 mit dem Kraftstoffdruck aus der Antriebshydraulik beaufschlagt werden, wie durch gestrichelte Hydraulikleitungen 41 und 43 angedeutet ist. Die beiden Hydraulikleitungen 41, 43 sind durch eine Verzweigungsstelle 42 miteinander verbunden. Über die beiden Hydraulikleitungen 41, 43 wird die Steuereinheit 35 mit der Eingangsseite der Kraftstoffhochdruckpumpe 25 verbunden. Diese Verbindung mit der Antriebshydraulik bringt Vorteile bei einem schnellen Start der Brennkraftmaschine. Neben der Zeit zur Synchronisation des Kurbelwellenwinkels mit der Nockenwelle und dem eigentlichen Drehzahlhochlauf bestimmt der Mindestraildruck zur Freigabe der Einspritzung die Startzeit. Um diese zu verkürzen, kann analog einem Railentlüften ein in der Kraftstoffhochdruckpumpe 25 vorgesehenes Hochdruckventil durch Anlegen des Drucks aus der Antriebshydraulik überbrückt und somit ein ausreichender Raildruck vorgespannt werden.

Neben der vorab beschriebenen Druckbeaufschlagung kann auch während eines Stillstands der Brennkraftmaschine mit einer einfachen Regelung der Raildruck in der Nähe des Arbeitsdrucks der Antriebshydraulik stabilisiert werden. Dabei lässt sich ein erheblicher Vorteil bei der Belastung der Hochdruckkomponenten im Lastkollektiv erzielen, insbesondere kleinere Druckspannenpaare. Bei einer selbstansaugenden hydraulischen Maschine 12 kann darüber hinaus noch die reguläre Vorförderung der Kraftstoffhochdruckpumpe 25 durch entsprechendes Entspannen des Kraftstoffs aus der Antriebshydraulik erfolgen. Ein herkömmliches Überströmventil an der Kraftstoffhochdruckpumpe 25 zur Druckregelung der Vorförderung kann somit entfallen.

Der Antrieb der Kraftstoffhochdruckpumpe 25 kann mechanisch durch die Brennkraftmaschine 11 erfolgen. Durch die erfindungsgemäße Integration der Antriebshydraulik kann der Antrieb aber auch über die Antriebshydraulik selbst hydraulisch erfolgen. Damit verschlechtert sich zwar der Gesamtwirkungsgrad zur Erzeugung des Einspritzdrucks, jedoch können die Anforderungen an die Kraftstoffhochdruckpumpe 25 durch einen Verzicht auf eine Saugdrosselung reduziert wird. Dabei können insbesondere die Druckbelastung und Momentenspitzen reduziert werden. Die Pumpendrehzahl und die Pumpengröße der Kraftstoffhochdruckpumpe sind bei entsprechender Anzahl von Förderelementen frei wählbar.

Von der Verzweigung 42 geht eine Hydraulikleitung 44 aus, welche die Antriebshydraulik mit einem Hydraulikmotor 45 verbindet, der, wie durch eine Linie 46 angedeutet ist, antriebsmäßig mit der Kraftstoffhochdruckpumpe 25 verbunden ist. Somit wird die Kraftstoffhochdruckpumpe 25 mit Hilfe des Hydraulikmotors 45 über die Antriebshydraulik, das heißt die hydraulische Maschine 12 und/oder den hydraulischen Energiespeicher 38 angetrieben. Bei diesem Antriebskonzept ist ein Anbau der Kraftstoffhochdruckpumpe 25 an die Brennkraftmaschine 11 nicht mehr nötig. Demzufolge entfallen entsprechende Vorgaben zum Einbauort der Kraftstoffhochdruckpumpe 25.

Der hydraulische Energiespeicher 38 dient dazu, in einem geeigneten Fahrzeugbetriebszustand mit der Antriebshydraulik, das heißt mit der hydraulischen Maschine 12, erzeugte Energie einzuspeichern. Im Rahmen der vorliegenden Erfindung hat sich zu diesem Zweck ein Gasdruckspeicher als besonders vorteilhaft erwiesen. Der Gasdruckspeicher liefert unter anderem den Vorteil, das die von der hydraulischen Maschine 12 im Pumpenbetrieb bereitgestellte Druckenergie weder zum Speichern noch zur anschließenden Nutzung gewandelt werden muss. Daraus ergibt sich eine einfache Integration einer Steuerung weiterer Komponenten über die Antriebshydraulik. Darüber hinaus sind schnelle Lade-/Entladegradienten möglich. Des Weiteren hat der Gasdruckspeicher ein geringes Gewicht und benötigt wenig Wartung. Dabei ermöglicht der Gasdruckspeicher eine ausreichende Speicherdauer, um Start-Stopp-Situationen gerecht zu werden.

Mit der Steuereinheit 35 werden die Energieflüsse in der Antriebshydraulik gesteuert. Abhängig vom Betriebszustand und vom Speicherinhalt des Energiespeichers 38 wird der Betrieb der hydraulischen Maschine 12 als Pumpe geregelt und die Energiespeicherung beziehungsweise der Betrieb der übrigen hydraulisch bedienten Komponenten koordiniert.

Über eine weitere Hydraulikleitung 40 ist die Kupplung 14 an die Steuereinheit 35 angeschlossen. Auch hier bietet die Integration in die Antriebshydraulik ein großes Potential. Für einen Startvorgang mit leerem Energiespeicher 38 muss die Kupplung 14 unbetätigt geschlossen sein. Anschließend kann über die hydraulische Maschine 12 die entsprechende Stellenergie zum optionalen Öffnen 14 bereitgestellt werden.

In Figur 2 sind in einem kartesischen Koordinatendiagramm die Drehzahl n der Brennkraftmaschine und der Raildruck p in dem zentralen Kraftstoffhochdruckspeicher des Kraftstoffeinspritzsystems über der Zeit t aufgetragen. Die Drehzahl n und der Raildruck p sind bis zu einem Stoppzeitpunkt 51 der Brennkraftmaschine über der Zeit konstant. Nach dem Stoppzeitpunkt 51 fallen sowohl die Drehzahl n als auch der Raildruck p linear über der Zeit ab. Dabei fällt die Drehzahl steiler ab als der Raildruck. Während einer Zeitspanne 54 sinken sowohl die Drehzahl als auch der Raildruck auf einen minimalen Wert beziehungsweise auf Null. Zu einem Startzeitpunkt 52 der Brennkraftmaschine steigt die Drehzahl linear an, bis sie wieder ihren vorherigen Wert erreicht. Der Raildruck steigt durch die erfindungsgemäße hydraulische Verbindung mit dem hydraulischen Energiespeicher bereits vor der Drehzahl und mit einer größeren Steigung als die Drehzahl an.

## Patentansprüche

1. Hybridantriebssystem mit einer Brennkraftmaschine (11), die mit Kraftstoff (21) aus einem Kraftstofftank (20) betrieben wird, und mit einer hydraulischen Maschine (12), die mit einem hydraulischen Energiespeicher (38) zusammenwirkt, **dadurch gekennzeichnet, dass** die hydraulische Maschine (12) mit dem gleichen Kraftstoff (21) betrieben wird, mit dem auch die Brennkraftmaschine (11) betrieben wird.

2. Hybridantriebssystem nach Anspruch 1, **dadurch gekennzeichnet, dass** die hydraulische Maschine (12) hydraulisch mit dem Kraftstofftank (20) der Brennkraftmaschine (11) und mit dem hydraulischen Energiespeicher (38) verbunden ist.

3. Hybridantriebssystem nach Anspruch 2, **dadurch gekennzeichnet, dass** eine Vorförderpumpe (22) zwischen den Kraftstofftank (20) und die hydraulische Maschine (12) geschaltet ist.

4. Hybridantriebssystem nach einem der vorhergehenden Ansprüche, **dadurch gekennzeichnet, dass** zwischen die hydraulische Maschine (12) und den hydraulischen Energiespeicher (38) eine Steuereinheit (35) geschaltet ist.

5. Hybridantriebssystem nach Anspruch 4, **dadurch gekennzeichnet, dass** die Steuereinheit (35) hydraulisch mit einer Kupplung (14) verbunden ist, die zwischen die Brennkraftmaschine (11) und die hydraulische Maschine (12) geschaltet ist.

6. Hybridantriebssystem nach Anspruch 4 oder 5, **dadurch gekennzeichnet, dass** die Steuereinheit (35) hydraulisch mit einem Hydraulikmotor (45) verbunden ist, der antriebsmäßig mit einer Kraftstoffhochdruckpumpe (25) eines Kraftstoffeinspritzsystems verbunden ist.

7. Hybridantriebssystem nach einem der Ansprüche 4 bis 6, **dadurch gekennzeichnet, dass** die Steuereinheit (35) hydraulisch mit einem Eingang einer beziehungsweise der Kraftstoffhochdruckpumpe (25) verbunden ist.

8. Hybridantriebssystem nach einem der vorhergehenden Ansprüche, **dadurch gekennzeichnet, dass** der hydraulische Energiespeicher (38) einen mit Kraftstoff gefüllten Gasdruckspeicher umfasst, der mit dem Kraftstofftank (20) in Verbindung steht oder verbindbar ist.

9. Verfahren zum Betreiben eines Hybridantriebssystems nach einem der vorhergehenden Ansprüche, **dadurch gekennzeichnet, dass** die hydraulische Maschine (12) mit dem gleichen Kraftstoff (21) betrieben wird, mit dem auch die Brennkraftmaschine (11) betrieben wird.

10. Verfahren zum Betreiben eines Hybridantriebssystems nach Anspruch 7 oder 8, insbesondere nach Anspruch 9, **dadurch gekennzeichnet, dass** die Kraftstoffhochdruckpumpe (25) des Kraftstoffeinspritzsystems bedarfsabhängig mit Kraftstoff versorgt wird, der durch die hydraulische Maschine (12) mit Druck beaufschlagt wird.

## Claims

1. Hybrid drive system having an internal combustion engine (11) which is operated with fuel (21) from a fuel tank (20), and having a hydraulic machine (12) which interacts with a hydraulic energy store (38), **characterized in that** the hydraulic machine (12) is operated with the same fuel (21) with which the internal combustion engine (11) is also operated.

2. Hybrid drive system according to Claim 1, **characterized in that** the hydraulic machine (12) is hydraulically connected to the fuel tank (20) of the internal combustion engine (11) and to the hydraulic energy store (38).

3. Hybrid drive system according to Claim 2, **characterized in that** a pre-delivery pump (22) is connected between the fuel tank (20) and the hydraulic machine (12).

4. Hybrid drive system according to one of the preceding claims, **characterized in that** a control unit (35) is connected between the hydraulic machine (12) and the hydraulic energy store (38).

5. Hybrid drive system according to Claim 4, **characterized in that** the control unit (35) is hydraulically connected to a clutch (14) which is connected between the internal combustion engine (11) and the hydraulic machine (12).

6. Hybrid drive system according to Claim 4 or 5, **characterized in that** the control unit (35) is hydraulically connected to a hydraulic motor (45) which is connected in terms of drive to a fuel high-pressure pump (25) of a fuel injection system.

7. Hybrid drive system according to one of Claims 4 to 6, **characterized in that** the control unit (35) is hydraulically connected to one inlet of a, or of the, fuel high-pressure pump (25).

8. Hybrid drive system according to one of the preceding claims, **characterized in that** the hydraulic energy store (38) comprises a gas pressure accumulator which is filled with fuel and which is connected, or can be connected, to the fuel tank (20).

9. Method for operating a hybrid drive system according to one of the preceding claims, **characterized in that** the hydraulic machine (12) is operated with the same fuel (21) with which the internal combustion engine (11) is also operated.

10. Method for operating a hybrid drive system according to Claim 7 or 8, in particular according to Claim 9, **characterized in that** the fuel high-pressure pump (25) of the fuel injection system is supplied with fuel as a function of requirements, said fuel being pressurized by the hydraulic machine (12).

## Revendications

1. Système d'entraînement hybride comprenant un moteur à combustion interne (11) qui est entraîné avec du carburant (21) provenant d'un réservoir de carburant (20), et comprenant une machine hydraulique (12) qui coopère avec un accumulateur d'énergie hydraulique (38), **caractérisé en ce que** la machine hydraulique (12) est entraînée avec le même carburant (21) que celui qui entraîne aussi le moteur à combustion interne (11).

2. Système d'entraînement hybride selon la revendication 1, **caractérisé en ce que** la machine hydraulique (12) est connectée hydrauliquement au réservoir de carburant (20) du moteur à combustion interne (11) et à l'accumulateur d'énergie hydraulique (38).

3. Système d'entraînement hybride selon la revendication 2, **caractérisé en ce qu'**une pompe de pré-alimentation (22) est montée entre le réservoir de carburant (20) et la machine hydraulique (12).

4. Système d'entraînement hybride selon l'une quelconque des revendications précédentes, **caractérisé en ce qu**'une unité de commande (35) est montée entre la machine hydraulique (12) et l'accumulateur d'énergie hydraulique (38).

5. Système d'entraînement hybride selon la revendication 4, **caractérisé en ce que** l'unité de commande (35) est connectée hydrauliquement à un embrayage (14) monté entre le moteur à combustion interne (11) et la machine hydraulique (12).

6. Système d'entraînement hybride selon la revendication 4 ou 5, **caractérisé en ce que** l'unité de commande (35) est connectée hydrauliquement à un moteur hydraulique (45) qui est connecté du côté de l'entraînement à une pompe à carburant haute pression (25) d'un système d'injection de carburant.

7. Système d'entraînement hybride selon l'une quelconque des revendications 4 à 6, **caractérisé en ce que** l'unité de commande (35) est connectée hydrauliquement à une entrée d'une ou de la pompe à carburant haute pression (25).

8. Système d'entraînement hybride selon l'une quelconque des revendications précédentes, **caractérisé en ce que** l'accumulateur d'énergie hydraulique (38) comprend un accumulateur de pression de gaz rempli de carburant, qui est en liaison ou qui peut être connecté au réservoir de carburant (20).

9. Procédé pour faire fonctionner un système d'entraînement hybride selon l'une quelconque des revendications précédentes, **caractérisé en ce que** la machine hydraulique (12) est entraînée avec le même carburant (21) que celui qui entraîne aussi le moteur à combustion interne (11).

10. Procédé pour faire fonctionner un système d'entraînement hybride selon la revendication 7 ou 8, en particulier selon la revendication 9, **caractérisé en ce que** la pompe à carburant haute pression (25) du système d'injection de carburant est alimentée en fonction des besoins en carburant sollicité en pression par la machine hydraulique (12).
